# EUROPEAN PATENT APPLICATION

(11) **EP 0 607 520 A1**
(43) Date of publication of application: **27.07.1994**
(21) Application number: 93118484.0
(22) Date of filing: 16.11.1993
(51) Int. Cl.: G03B 42/02, G03B 42/04

(54) **Autoloader having retractable shelf**

(30) Priority: 25.11.1992 US 981630
(71) Applicant: EASTMAN KODAK COMPANY, Rochester, New York 14650-2201 (US)
(72) Inventor: Boutet, John Claude, c/o Eastman Kodak Company, Rochester, New York 14650-2201 (US); DeWolff, Darryl David, c/o Eastman Kodak Company, Rochester, New York 14650-2201 (US); Lattimore, James Dean, c/o Eastman Kodak Company, Rochester, New York 14650-2201 (US); Sheridan, James Joseph, c/o Eastman Kodak Company, Rochester, New York 14650-2201 (US); Yaskow, Jeffrey James, c/o Eastman Kodak Company, Rochester, New York 14650-2201 (US)
(74) Representative: Pohle, Reinhard, Dipl.-Phys.

(57) **Abstract**

An apparatus for storing and automatically delivering cassettes 20 and/or pallets containing cassettes 20 to a reader 12. The apparatus includes a retractable shelf 35 slideably mounted to the apparatus for movement between a retracted position and an extended position. The apparatus may also include sensors for sensing if the retractable shelf 35 is in the retracted position, for sensing if an object has been left on the retractable shelf 35, and for sensing if an object is obstructing the forward path of the retractable shelf 35. The retractable shelf 35 may be mounted to the apparatus by a plurality of elastomeric mounts 82 for isolating shocks applied to the retractable shelf 35.

## Description

The present invention pertains to equipment used in processing photosensitive material, and more particularly to an autoloader for feeding cassettes and/or pallets containing cassettes to and receiving them from a computed radiographic reader.

It is convenient to handle storage phosphorous film/plates within cassettes that protect the film from extraneous light and damage. Storage phosphorous film is read by photoelectrically detecting an image formed by scanning with stimulating radiation. An example of such a scanner/reader is disclosed in US-A-4,789,782. It is desirable to retain the x-ray film within a cassette except during actual processing. Such a cassette is disclosed in European Patent Application No. 92119102.9. A hook extractor can be used with the x-ray cassette to move a photographic element to and from an x-ray reader for processing. It is desirable to provide an apparatus to automate the presentation of such x-ray cassettes or similar cassettes to such an extractor so that a number of x-ray cassettes could be processed in succession without attention from an operator. It is also desirable that such an apparatus be able to accurately position x-ray cassettes and/or pallets containing cassettes sequentially to simplify removal and reinsertion of the photographic elements and that the presentation apparatus be separate from the x-ray reader to permit interchange of units and reduce repair time. An example of a suitable device for presenting cassettes is disclosed in European Patent Application No. 92120313.9. In this reference there is disclosed a positioner/autoloader for use with a plurality of x-ray cassettes and/or pallets containing cassettes which comprise first and second cog belts spaced apart so as to provide a plurality of cassette retaining sites one of which defines a cassette read site for presenting of the cassette to the reader. The belts are driven such that the cassettes are each individually positioned at the read site for removal of the photosensitive film therein for reading by the reader after which it is returned to the cassette. The positioner allows a plurality of individual cassettes to be placed thereon for automatic supplying to the reader thus freeing the operator to accomplish other duties. Typically the autoloader is either being loaded or unloaded during the time the adjacent reader is reading a storage phosphor film that has already been presented to the reader by the autoloader. It is desirable to be able to stack cassettes that are to be loaded into the autoloader or have been unloaded from the autoloader. Copending application Serial No. 902,214 discloses the use of a retractable shelf in a cassette autoloader.

With such positioners it is important that the mechanism be designed to operate in such a manner so as to minimize any transfer of vibrations from the autoloader to the reader which can adversely affect the reader reading the information stored on the photo stimulable phosphorous film. Accordingly, if the autoloader is to be provided with a retractable storage shelf which will not interfere with the reader, the shelf should operate in a smooth efficient manner, not transmit any vibrations to the reader, and preferably be capable of automatic operation. It is also desirable to provide means for determining if there are any obstructions present with respect to the operation of the shelf and/or movement of the cassettes within the autoloader which would interfere with the shelf.

In accordance with the present invention there is provided an autoloader having a retractable shelf which is designed to minimize the transfer of vibrations to the reader which can adversely affect the reading of the photographic element, is capable of automatic operation, and can sense if an obstruction is present with respect to the operation of the shelf or movement of cassettes within the autoloader.

In one aspect of the present invention there is provided an apparatus for storing and automatically delivering cassettes and/or pallets containing cassettes to a reader. The apparatus includes a retractable shelf slideably mounted to the apparatus for movement between a retracted position and an extended position. The apparatus may also include means for sensing if the retractable shelf is in the retracted position, means for sensing if an object has been left on the retractable shelf, and/or means for sensing if an object is obstructing the forward path of the retractable shelf.

In another aspect of the present invention there is provided an apparatus for storing and automatically delivering cassette and/or pallets containing cassettes to a reader having a retractable shelf moveably mounted to the apparatus for movement between a retracted position and an extended position. The retractable shelf is mounted to the apparatus by a plurality of elastomeric mounts.

In the detailed description of the preferred embodiment of the invention presented below reference is made to the accompanied drawings, in which:
Figure 1 is a front perspective view of an x-ray cassette autoloader/positioner made in accordance with the present invention illustrating the door assembly in the closed position and the retractable shelf in the retracted position;
Figure 2 is a view similar to Figure 1 illustrating the door assembly in the open position and the retractable shelf in the retracted position;
Figure 3 is a view similar to Figure 1 illustrating the door assembly in the open position and the retractable shelf in the extended position;
Figure 4 is a side perspective of the autoloader of Figure 3 illustrating a plurality of cassettes on the retractable shelf and an operator at the operator station;
Figure 5 is a side view of the autoloader of Figure 1 as taken along line 5-5 with the outer shell partially broken away illustrating the retractable shelf in the retracted position and a portion of one of the cog belts;
Figure 6 is an exploded view of the retractable shelf assembly illustrated in Figures 2-5;
Figure 7 is a side elevational view of the retractable shelf assembly of Figure 5 with no force acting the surface of the shelf;
Figure 8 is a side elevational view similar to Figure 7 illustrating a force being applied to the top of the shelf;
Figure 9 is a cross-sectional view of the retractable shelf assembly of Figure 7 as taken along line 9-9 illustrating the shelf with a plurality of cassettes resting thereon;
Figure 10 is a cross-sectional view of the retractable shelf assembly of Figure 10 as taken along line 10-10 illustrating the mechanism used to extend and retract the shelf; and
Figure 11 is a side elevational view similar to Figure 7 illustrating the means used to maintain the outer shelf in the unbiased position and the sensing means used to detect movement of the outer support shelf.

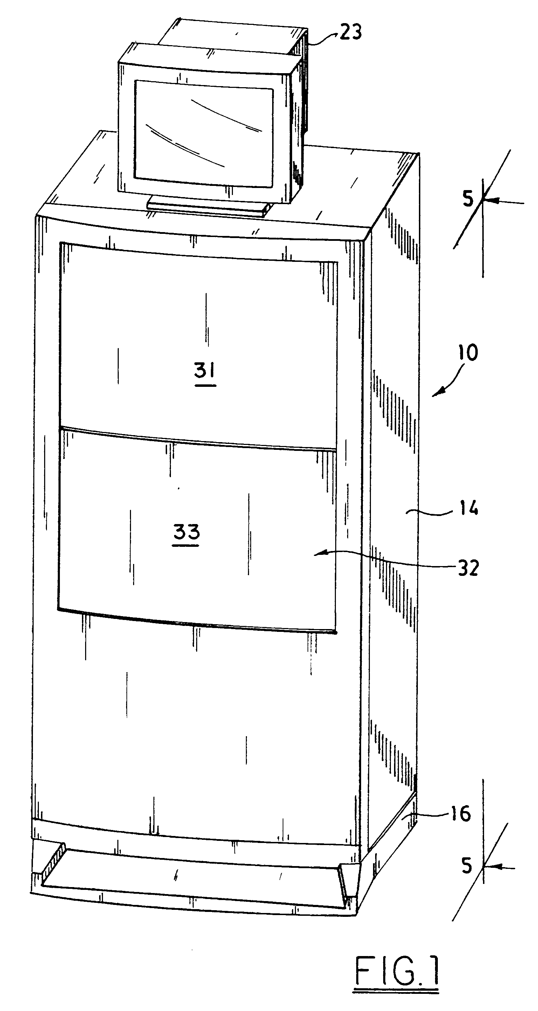

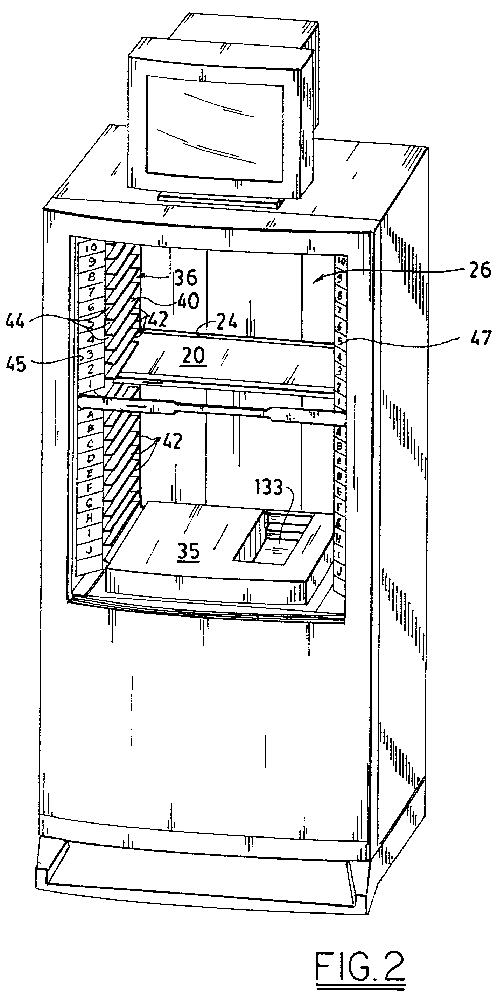

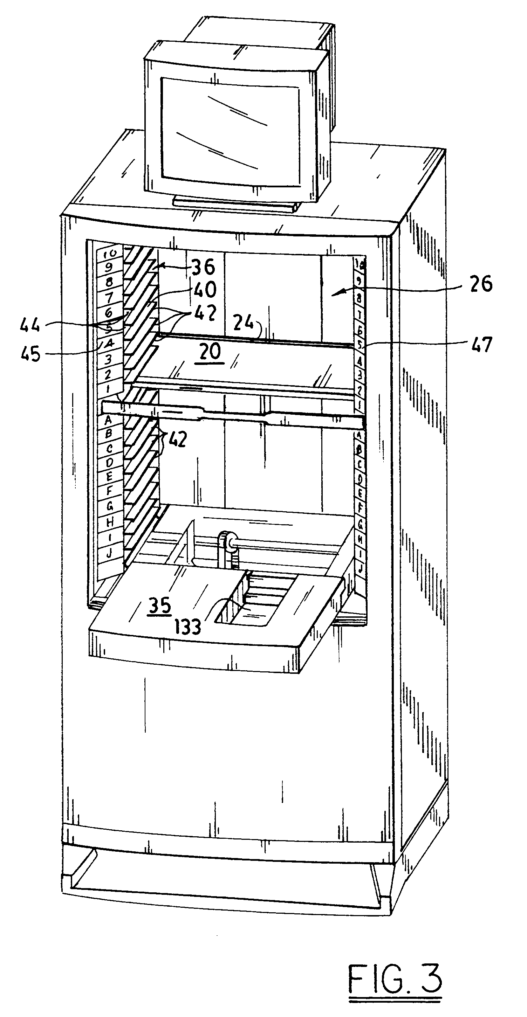

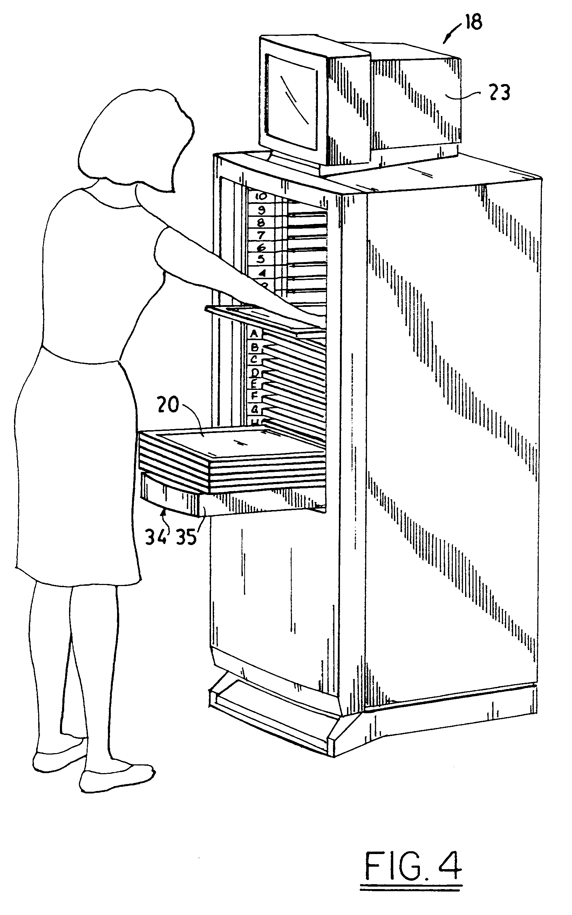

Referring to the figures, there is illustrated an autoloader 10 made in accordance with the present invention. The autoloader has a body 14 with a base 16 at the bottom and a monitor station 18 on top. The body 14 can be made of sheet metal or the like reinforced as necessary to support loads imposed by the autoloader components and x-ray cassettes or pallets containing cassettes. The cassette is of the type wherein the photosensitive material is removed through one of the sides of the cassette such as that described in European Patent Application No. 92119102.9. Briefly, the cassette comprises a shell having upper and lower panels and three side caps joining the upper and lower panels, and a removable end cap. A photographic element, such as stimulable phosphor plate, is provided within the cassette and is secured to the removable end cap. The end cap includes a latching mechanism for releasing the end cap from the cassette. A latch bar having at least one hook is used to latch or unlatch the latching mechanism. It is to be understood that other cassette construction may be used as appropriate, such as that disclosed in US-A-5,065,866 and US-A-5,090,567. The monitor station may include some means for preventing inadvertent movement of the monitor 23 , such as indentations. At the rear, body 14 has an access opening 24 , as best seen by reference to Figures 2 and 3, through which the forward end of a cassette is passed so that the forward end of the cassette 20 is placed within the adjacent X-ray reader 12 . At the front, body 14 has a portal 26 which is generally rectangular in shape and provides access to the interior of body 14 . Facing portal 26 is an operator station, which may be occupied by an operator such as illustrated in Figure 4. Door assembly 32 of body 14 is operable between a closed position, as shown in Figure 1, in which the portal 26 is closed and an open position, as shown in Figure 2 in which the interior of body 14 is accessible through portal 26 . Briefly, the door assembly includes a pair of panels 33 , 35 slideably mounted to body 14 such that when in the closed position the portal 26 is closed. However, for the purposes of this invention, any door assembly desired may be utilized.

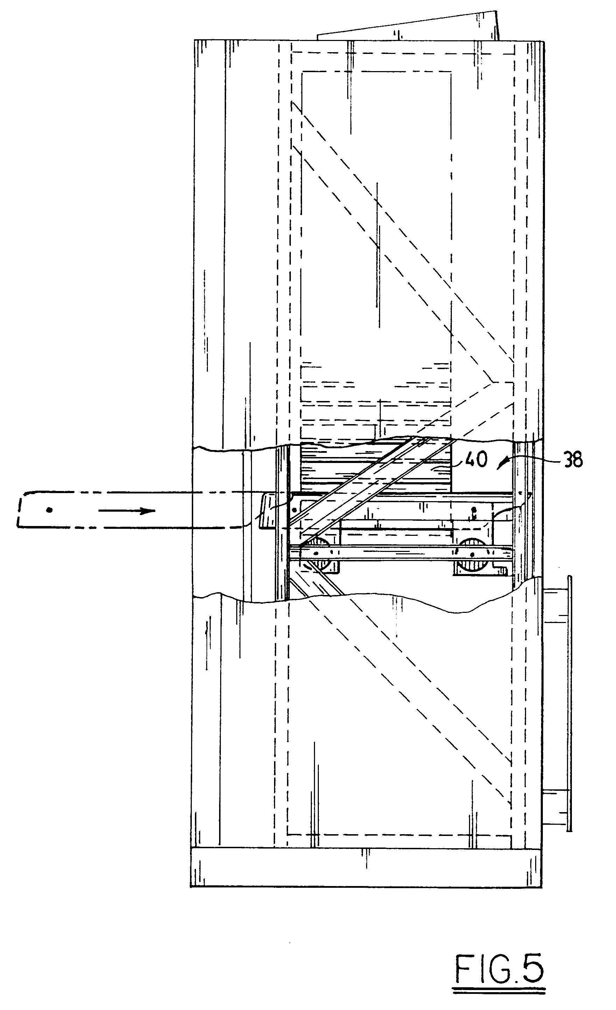

Autoloader 10 includes a retractable shelf/table assembly 34, which includes a retractable shelf 35 that can be moved between an extended stacking position, as shown in Figures 3 and 4, and a storage retracted position, inside body 14, as shown in Figures 2 and 5. In the storage retracted position the retractable shelf 35 is disposed totally within the body 14 so that the door assembly 32 can be closed as shown in Figure 1. Shelf assembly 34 can be used to hold x-ray cassettes 20 and/or pallets not shown containing cassettes during loading and unloading. Controls not shown are provided to permit the operator to either open the door assembly 32 and have the shelf assembly 34 extended automatically or to open only the door 32 without extending of the retractable shelf assembly 34 . A wide variety of means may be employed for controlling operation of the autoloader which are well known in the prior art. In the particular embodiment illustrated the autoloader 10 is provided with a microprocessor which is appropriately linked up to various switches, motors and controls to operate the door assembly, the retractable shelf and various other functions of the device in a pre-set pattern. Such controls are well known in the art and therefore will not be discussed further.

Referring to Figures 2-5, the autoloader is provided with a first and second conveyor assemblies 36, 38, respectively. Each conveyor assembly 36, 38 is provided with an endless cog belt 40 and each cog belt 40 has a plurality of regular spaced shelves 42. The cog belts 40 are aligned and driven such that the shelves 42 provide a plurality of vertically arranged cassette retaining sites 44 within body 14. In line with the center of access opening 24 there is provided a read site 46 so that the cassette when placed in such position can be advanced for reading into the adjacent x-ray reader 12. The cassette retaining sites 44 above reading site 46 are loading sites wherein cassettes which have yet to be read are placed. In the particular embodiment illustrated these loading sites are identified by numerals, one through ten, placed on side panels 45, 47 as shown in Figure 2. The cassette sites 44 below read site 46 are unloading sites and are preferably identified by different indicia from that of loading sites. In the particular embodiment illustrated, the unloading sites are identified by letters and in particular, by the letters A-J. Cassettes 20 can be interchanged between cassette retaining sites easily since each cassette is supported by a pair of vertically aligned shelves 42 and cassettes 20 are spaced apart from each other by a distance sufficient to permit each individual cassette 20 to be gripped while positioned fully to the back of every cassette site 44. While only one read site is provided, any number of loading and unloading sites may be provided as desired. In the particular embodiment illustrated, there are provided ten loading sites and ten unloading sites. To prevent accidental placement or attempted removal of a cassette from read site 46, a cross bar 49 is secured to body 14 in front of read site 46.

The cog belts 40 are driven in unison by a drive means provided not shown. An example of a mechanism used to drive cog belts 40 is more fully described in European Patent Application 92120313.9. Such mechanism is used to in seriatim place cassettes at the read site for removal of the photosensitive material and delivery to the reader and to unloading sites after the photosensitive material has been returned to the cassette.

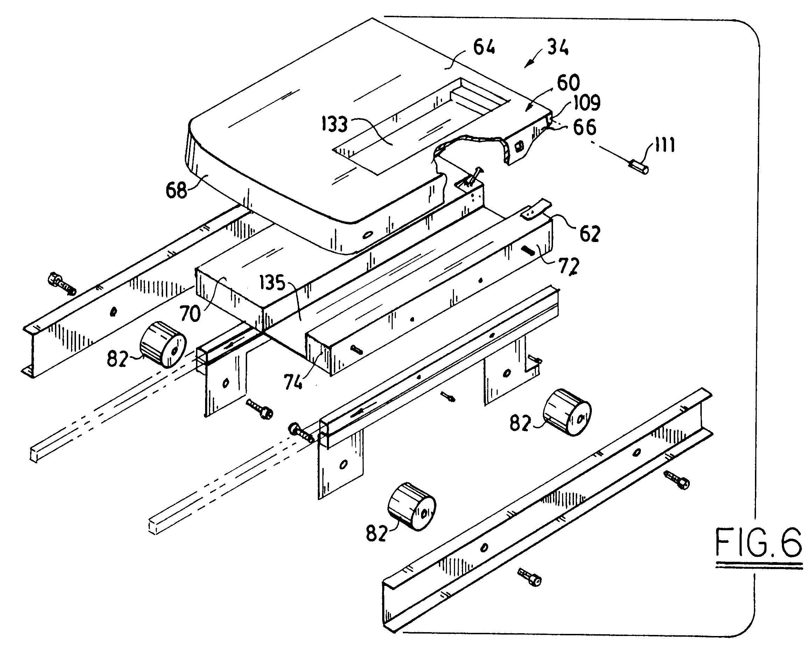

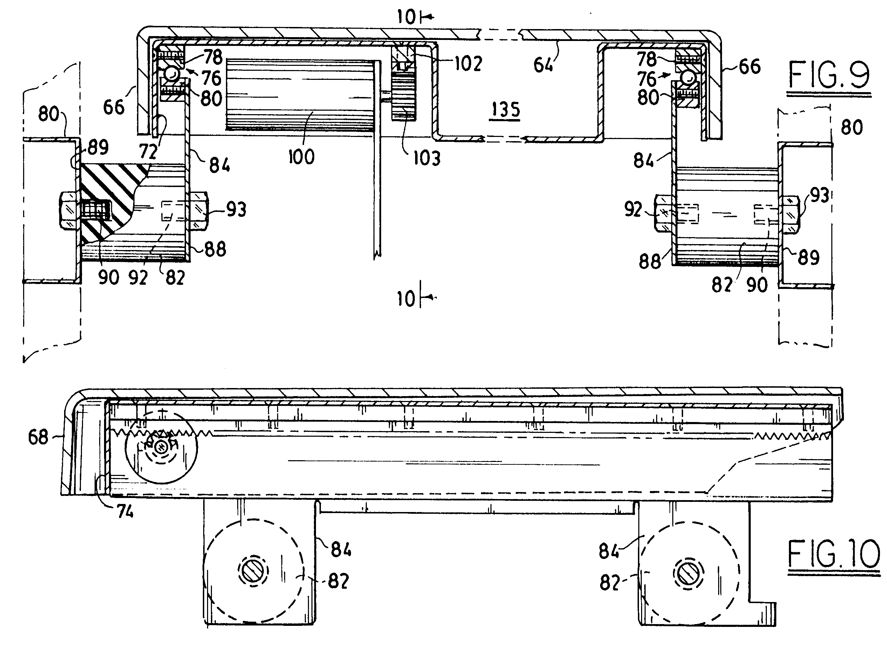

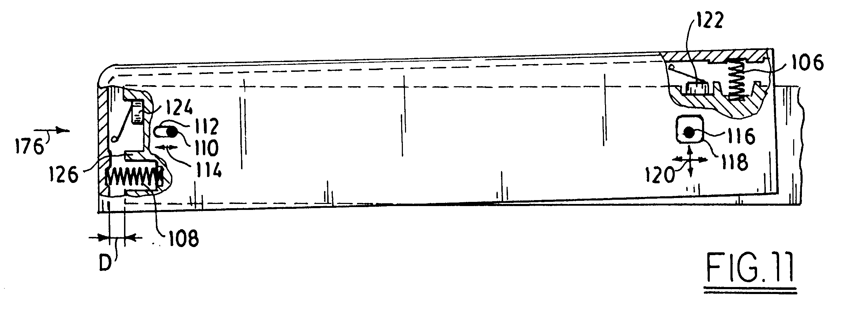

Referring to Figures 6-11 there is illustrated in greater detail the retractable shelf assembly 34 and its operation. In particular, the retractable shelf assembly comprises a retractable shelf 35 which includes an outer support shell 60 and an inner support structure 62. The outer support shell 60 comprises a substantially planar top support surface 64, a pair of side flanges 66 extending downward at opposite side edges of the support surface 64, and a front flange 68 extending downward from the front edge of top support surface 64 and connecting side flanges 66. The outer support shell 60 is preferably made of a plastic material. In the particular embodiment illustrated outer support shell 60 is made of poly vinyl chloride PVC. The inner support structure 62 is located beneath top support surface 64 in between flanges 66, 68. The inner support structure 62 is designed to provide support to the outer support shell 60 such that cassettes or other similar articles can be supported by the outer shell 60. In the particular embodiment illustrated the inner support structure 62 is made of sheet metal and comprises an upper support surface 70 , a pair of downward extending side flanges 72 and a front flange 74 spaced a predetermined distance behind flange 68. The shelf assembly 34 includes a pair of slides 76, each slide 76 comprising a moveable race 78, being secured to adjacent side flange 72 and a second stationary race secured to the frame 80 of the autoloader by a plurality of elastomeric mounts 82. An optional intermediate race not shown may be provided in order that greater extension of the shelf can be obtained. In the particular embodiment illustrated, four elastomeric mounts 82 are used, two for each slide. In the particular embodiment illustrated mounting brackets 84 are provided for securing the mounts 82 to slides 76. The mounts 12 include a pair of mounting studs 90, 92 which extend from the opposite end 88, 89 in substantially opposite directions. The studs 90, 92 are independent from each other, each having an inner end embedded in the elastomeric mount 82. The outer end of the studs 90, 92 are threaded so that they can be secured to the appropriate slide or frame by a threaded nut. This type of mounting isolates the retractable shelf 34 so that shock vibration will not be transmitted to the adjacent reader. In some situations the vibrations mounts 82 may be omitted, for example, in situations where the entire autoloader is vibration isolated from the reader, thereby possibly eliminating the need for isolating the retractable shelf.

A motor 100 mounted to the frame of the autoloader is provided for moving the retractable shelf between the extended and retracted positions. As illustrated the motor 100 is disposed within the inner support structure 62. A rack 102 is secured to the bottom of inner support structure 62 which engages a pinion gear 103 secured to the shaft of motor 100 such that when the shaft of motor 100 is rotated in a first direction it will cause the inner support structure to extend outward as illustrated in Figure 3 and rotating in the opposite direction will cause the inner support structure to return to the retracted position as illustrated in Figure 2. The operation of the retractable shelf can be made to be automatic with the opening and closing of the door assembly 32 or can be connected to a separate control switch to be used by the operator as needed.

Means are provided for monitoring the position of retractable shelf 351. In the particular embodiment illustrated, a light sensor 109 secured to the frame of the autoloader monitors a flag 111 on outer shell 60 or other portion of the retractable shelf which is activated when the shelf is in the retracted position. The light sensor produces an appropriate signal that is forwarded to a microprocessor for controlling operation of the door assembly. Therefore, the door assembly 32 can be prevented from any further movement until the shelf is properly positioned in the retracted position. It is to be understood that any desired sensing means may be employed. Similar type sensors may be also employed for sensing when the shelf 35 is in the fully extended position.

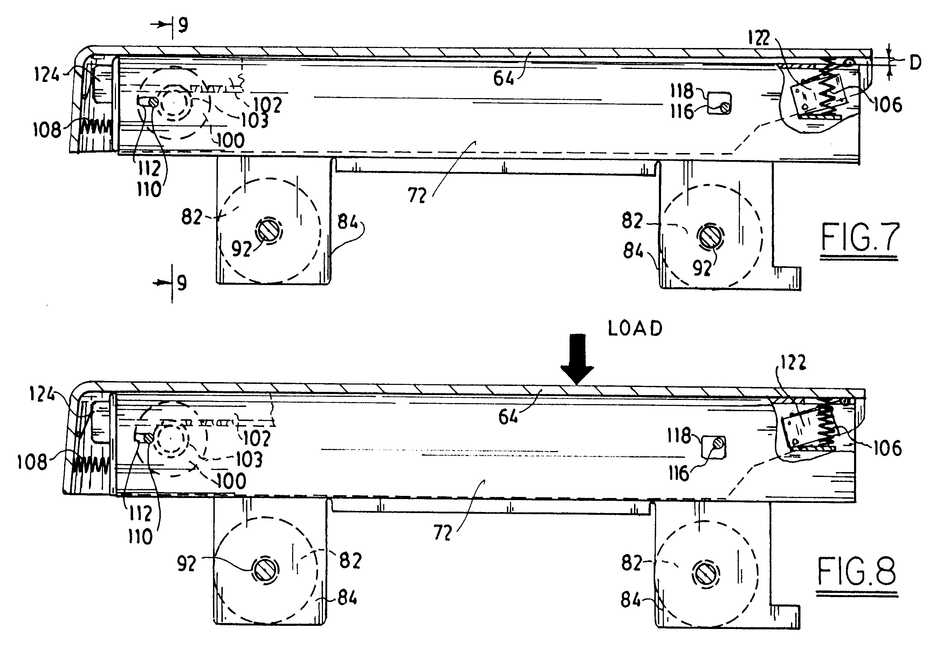

Means are provided to prevent operation of the retractable shelf 35 if objects have been placed on the shelf producing a downward force as illustrated by the arrow in Figure 8 , or if the shelf encounters an obstacle during its travel to the extended position. The outer support shell 60 is secured to the inner support structure 62 by means which allow the outer support shell 60 to move relative to the inner support structure 62. In the particular embodiment illustrated, a pair of springs 106 are provided on the top surface of the inner support structure which are located at the rear section of the outer support shell 60. A second pair of springs 108 are provided between the front flanges 68, 74 of outer shell 60 and support structure 62, respectively, so as to bias the two flanges away from each other. A first pair of guide pins 110 are provided on the side flanges 72 of the inner support structure 62 which extend through a pair of elongated slots 112 in the adjacent flanges 66 of outer support shell 60. The slots 112 are sized such that the pins 110 can move only in the horizontal direction as indicated by arrow 114. A second pair of guide pins 116 are provided at the rear portion of the flanges 72 of the inner support structure 62 which extend through an opening 118 in the adjacent flange of the outer shell 60. The openings 118 are such that the pins 116 can move both in the horizontal and vertical directions as indicated by cross arrow 120 . This allows the outer shell 60 to be responsive to downward forces such as cassettes placed thereon as shown in Figure 4. A switch 122 is provided on inner support structure 62 at the rear section beneath the outer support shell 60 such the switch 122 will be activated should the outer support shell 60 be moved toward inner support structure 62 a predetermined distance D1, for example, if a cassette is on support shell 60. When the switch 122 is activated a signal is produced which is sent to the microprocessor which can control the motor 100. Therefore, if an object is left on the shelf, or if an object is pressed against the top of the support shell 60, the microprocessor an turn off the appropriate motor and thus avoid or minimize any damage to the device. In a similar manner, a second switch 124 is placed on the front flange 74 of the inner support structure 62 switch 124 will be activated if a force is applied to the front of flange 66 of the outer support shell 60 as illustrated by arrow 176 in Figure 11. A stop 126 is provided for limiting the amount the outer shell 60 can move. Thus if the outer shell 60 is moved back toward the inner support structure 62 a distance D1 the switch 124 will produce a signal for sending to the microprocessor which can provide the appropriate response, such as turn off the motor 100.

As illustrated by Figures 2, 3, 6 and 9, the shelf 35 is provided with wells 133, 135 in outer support shell 60 and inner support structure 62, respectively. The wells 133 , 135 allow the use of the shelf assembly 34 when the right conveyor assembly is moved to a narrow position for receiving smaller sized cassettes.

The present invention provides an autoloader having a retractable shelf which is designed to minimize the transfer of vibrations to the reader which can adversely affect the reading of the photographic element, is capable of automatic operation, and can sense if an obstruction is present with respect to the operation of the shelf or movement of cassettes within the autoloader.

## Claims

1. An apparatus for storing and automatically delivering cassettes (20) and/or pallets containing cassettes (20) to a reader (12), comprising:
a retractable shelf (35) slideably mounted to the apparatus for movement between a retracted position and an extended position,
means for sensing if the retractable shelf (35) is in the retracted position;
means for sensing if an object has been left on the retractable shelf (35);
means for isolating shocks applied to the retractable shelf (35) from being transmitted from the retractable shelf (35) to the body 14; and
means for sensing if an object is obstructing the forward path of the retractable shelf (35).

2. An apparatus as claimed in claim 1 wherein the means for sensing if the retractable shelf (35) is in the retracted position comprises:
a light sensor (109) secured to the body (14) designed to monitor the position of a flag 111 secured to the retractable shelf (35).

3. An apparatus as claimed in claim 1 wherein the means for sensing if the retractable shelf (35) is in the retracted position comprises:
a switch (109) positioned with respect to the shelf (35) so that it is actuated by the retractable shelf (35) when the retractable shelf (35) is in the retracted position.

4. An apparatus as claimed in claim 1 wherein the retractable shelf (35) includes a frame (80) and an outer shell support structure (60) mounted to the frame (80), the means for sensing if an object has been left on the retractable shelf (35) comprising:
means responsive to a movement of the outer shell support structure (60) toward the frame (80).

5. An apparatus as claimed in claim 4 wherein the outer shell support structure (60) is pivotally mounted to the frame (80).

6. An apparatus as claimed in claim 1 wherein the means for isolating shocks applied to the retractable shelf (35) from being transmitted from the retractable shelf (35) to the body (14) comprises:
a plurality of elastomeric mounts (82) which secure the retractable shelf (35) to the body (14).

7. An apparatus as claimed in claim 5 wherein the outer shell (60) is provided with a pair of oppositely disposed downward extending flanges (72), the outer shell (60) being pivotally mounted to the support frame (80) by a first pair of pins (110) secured at one end of the support frame (80) which engage a pair of slots (112) in the flanges (66,68) of the outer shell (60) and a second pair of pins (116) secured to the support frame (80) which extend through a pair of openings (118) at the other end of the support frame (80), the second pair of openings (118) allowing movement of the second pair of pins (116) in two directions.

8. An apparatus as claimed in claim 4 wherein the means for sensing if an object has been left on the retractable shelf (35) comprises:
switch means secured to the frame (80) of the retractable shelf (35) which produces a signal in response to the outer shell (60) engaging the switch means.

9. An apparatus for storing and automatically delivering cassette (20) and/or pallets containing cassettes (20) to a reader (12), comprising:
a retractable shelf (35) moveably mounted to the apparatus for movement between a retracted position and an extended position, the retractable shelf (35) comprising:
a plurality of elastomeric mounts (82) mounting the retractable shelf (35) to the body (14).

10. An apparatus as claimed in claim 9 wherein the retractable table (34) further comprises:
a support frame (80) mounted to a pair of slides (76), the slide (76) being mounted to the body (14) by the elastomeric mounts (82);
an outer support shell (60) secured to the frame (80).

11. An apparatus for storing and automatically delivering cassettes (20) and/or pallets containing cassettes (20) to a reader (12), comprising:
storage and delivery means defining a cassette read site (46) and a plurality of cassette loading sites, means for moving the storage and delivery means so as to transfer cassettes (20) located in the loading sites serially through the read site (46), and a body (14) encasing the storage and delivery means, the body (14) having a portal (26) adjoining the cassette sites (44) for allowing cassettes (20) to be placed on or removed from the storage and delivery means, the improvement comprising:
a retractable shelf (35) slideably mounted to the apparatus for movement between a retracted position and an extended position,
means for sensing if the retractable shelf (35) is in the retracted position.

12. An apparatus as claimed in claim 11 wherein the shelf (35) is provided with wells (133,135) for allowing repositioning of the conveyors (36,38) to a second closer spacing.

13. An apparatus for storing and automatically delivering cassettes (20) and/or pallets containing cassettes (20) to a reader (12), comprising:
a body (14) having a portal (26) for allowing casettes (20) to be placed within or removed from the apparatus and a door assembly (32) adjacent the portal (26) movable between an open position and a closed position, when the door assembly (32) is in the open position cassettes (20) may be passed through the portal (26) and when the door assembly (32) is in the closed position the portal (26) is blocked, the improvement comprising:
a retractable shelf 35 slideably mounted to the apparatus for movement between a retracted position and an extended position,
means for automatically moving the retractable shelf (35) between the retracted and extended positions in response to the position which the door assembly (32) is placed.

14. An apparatus for storing and automatically delivering cassettes (20) and/or pallets containing cassettes (20) to a reader (12), comprising:
a retractable shelf (35) slideably mounted to the apparatus for movement between a retracted position and an extended position,
means for sensing if an object has been left on the retractable shelf (35).

15. An apparatus for storing and automatically delivering cassettes (20) and/or pallets containing cassettes (20) to a reader (12), comprising:
a retractable shelf (35) slideably mounted to the apparatus for movement between a retracted position and an extended position; and
means for sensing if an object is obstructing the forward path of the retractable shelf (35).
